# EUROPÄISCHE PATENTSCHRIFT

(11) **EP 1 531 208 B1**
(45) Veröffentlichungstag und Bekanntmachung des Hinweises auf die Patenterteilung: **25.04.2007**
(21) Anmeldenummer: 04025417.9
(22) Anmeldetag: 26.10.2004
(51) Int. Cl.: E04D 13/08, F16L 37/091, F16L 37/15, F16L 37/14, F16L 37/084, F16L 37/12

(54) **Leitungssystem zum Ableiten von Flüssigkeit**
Piping system for draining a liquid
Système de conduite pour l'évacuation d'un liquide

(30) Priorität: 17.11.2003 DE 10353660
(43) Veröffentlichungstag der Anmeldung: 18.05.2005
(73) Patentinhaber: Metallwarenfabrik Marktoberdorf GmbH & Co. KG, 87616 Marktoberdorf (DE)
(72) Erfinder: Eurisch, Hans, 87674 Immenhofen (DE)
(74) Vertreter: Tiesmeyer, Johannes

(56) Entgegenhaltungen:
- EP-A- 1 178 255
- DE-A1- 3 322 202
- DE-A1- 10 160 194
- GB-A- 631 745
- US-A- 2 127 284
- US-A- 2 212 679
- US-A- 5 094 481
- US-A1- 2003 071 460
- US-B1- 6 341 804

## Beschreibung

Die vorliegende Erfindung betrifft ein Leitungssystem mit den Merkmalen des Oberbegriffs des Anspruchs 1.

Ein solches Leitungssystem wird zum Ableiten von Regenwasser verwendet. Insbesondere bei einer Rohrkonstellation, bei der ein zumindest abschnittsweise schräg verlaufendes Rohrelement stromabwärtig an einem vertikalen Rohrelement angeschlossen ist, kann eine große Regenwassermenge in dem schräg verlaufenden Rohrelement zu einer starken Gewichtsbelastung führen, welche auf die gemeinsame Steckverbindung der beiden Rohrelemente mit der Tendenz zur Lösung der Steckverbindung wirken kann. Es ist in solchen Fällen normalerweise erforderlich, die Steckverbindung zu sichern. Ein typischer Fall einer solchen Rohrkonstellation liegt z.B. bei einem an einer Dachrinne angeschlossenen Ablaufstutzen mit vertikaler Ableitung und einem daran vermittels Steckverbindung angeschlossenen Ablaufrohrbogen bzw. Schrägrohr vor.

Solche Steckverbindungen können bekanntermaßen durch Löten, Nieten oder durch Verwendung von Rohrschellen gesichert werden. Es ist auch bekannt, die Steckverbindung zwischen einem Ablaufstutzen und einem Ablaufrohrbogen durch eine Drahtsicherung zu sichern. Dabei ist ein Draht durch ein Loch bzw. eine außen aufgesetzte Lasche am Ablaufrohrbogen und durch ein Loch bzw. eine außen aufgesetzte Lasche am Ablaufstutzen hindurchgeführt, wobei die Drahtenden miteinander verdrillt sind, um eine geschlossene Halteschlaufe zu bilden. Solche Drahtsicherungen, Schellensicherungen oder Manschettensicherungen erfordern einen vergleichsweise hohen Montageaufwand und können optisch störend sein und das Aussehen des Leitungssystems in negativer Weise prägen. Lötverbindungen oder Nietverbindungen haben den Nachteil, dass die aneinander angeschlossenen Rohrelemente bei Bedarf nur mit großem Aufwand voneinander trennbar sind.

Aus der DE 101 60 194 A1 ist eine Montagehilfe für Regenwasser-Ablaufgarnituren bekannt, bei denen zwei einander übergreifende, rohrförmige Teile in einer vertikalen Ebene ausgerichtet aneinander gehalten werden müssen, bis das untere übergreifende Teil auf weiteren Abschnitten des Regenwasser-Ablaufsystems abgestützt ist. Als Montagehilfeelement wird ein von den miteinander zu verbindenden Teilen unabhängiges, mit dem einen Teil verbindbares und mit dem anderen Teil form- oder kraftschlüssig zusammenwirkendes Klemmelement verwendet. Das in der DE 101 60 194 A1 gezeigte Klemmelement ist ein U-förmiger Klipp, der einerseits einen federnden Halteschenkel und andererseits einen mit bezüglich seiner Ebene wechselseitig ausgerichteten Krallen versehenen Verbindungsschenkel aufweist. Es handelt sich dabei um einen Aufsteckklipp, welcher auf den Endabschnitt eines der miteinander zu verbindenden Rohrteile aufgesteckt wird. Beim Zusammenstecken der miteinander zu verbindenden Rohrteile verkrallen sich die Zacken des Aufsteckklipps mit den Rohrteilenden, so dass es zu einer hinreichend stabilen Klemmverbindung der beiden Rohrteile kommt. Ein Nachteil dieser bekannten Lösung liegt darin, dass der Aufsteckklipp dem Zusammenstecken der miteinander zu verbindenden Rohrteile einen vergleichsweise großen Widerstand entgegensetzt, so dass erhebliche Kräfte erforderlich sind, um die Rohrteile mit hinreichendem axialem Überlapp zusammenzustecken. Insbesondere in Fällen, in denen der Monteur die Rohrteile aus einer ungünstigen Standposition heraus, etwa von einer Leiter aus, miteinander zu verbinden hat, wirkt sich die Schwergängigkeit des Steckvorgangs bei der Vorgehensweise gemäß der DE 101 60 194 A1 besonders störend aus.

Aufgabe der vorliegenden Erfindung ist es, ein Leitungssystem der eingangs genannten Art mit einer verbesserten, montagefreundlichen und insbesondere optisch unauffälligen Steckverbindungssicherung bereitzustellen.

Diese Aufgabe wird gemäß der technischen Lehre des Anspruchs 1 gelöst.

Zur Sicherung der Steckverbindung im betriebsfertig montierten Zustand der Rohrelemente ist wenigstens ein in deren Überlappungsbereich zwischen den Endabschnitten positioniertes Klemmelement aus einem harten Material, insbesondere Metall oder ggf. Hartkunststoff, vorgesehen. Das Klemmelement weist wenigstens eine Zunge mit einem Krallenabschnitt an einem ihrer Enden auf, wobei die Zunge zumindest teilweise in einer insbesondere als Sicke ausgebildeten, axial verlaufenden Nut in dem Endabschnitt eines der Rohrelemente aufgenommen und an diesem formschlüssig fixiert ist.

Gemäß einer Ausführungsform ist die Zunge so fixiert, dass sie beim Zusammenstecken der Rohrelemente weitgehend in die Nut federnd ausweichen kann bzw. in der Nut Platz findet, dabei aber so orientiert ist bzw. nachträglich einstellbar ist, dass sie in Bezug auf das betreffende andere Rohrelement mit erhöhter Klemmkraft abzugshemmend wirkt, so dass sie dem Auseinanderziehen der Rohrelemente einen erheblichen Klemmwiderstand entgegensetzt. Das Leitungssystem nach der Erfindung ist somit auf einfache Weise und mit vergleichsweise geringem Kraftaufwand durch Zusammenstecken der Rohrelemente zu montieren, wobei die Steckverbindungssicherung zuverlässig funktioniert und optisch unauffällig ist. Ein weiterer Vorteil der Erfindung liegt darin, dass keine engen Toleranzen bei der Fertigung der Rohrelemente einzuhalten sind, um eine gute Steckverbindung zwischen ihnen zu gewährleisten. Außerdem ist das Material des Klemmelementes weitgehend unabhängig vom Material der Rohrelemente, so dass die Materialien jeweils optimiert gewählt werden können. Ferner ist eine solche Zunge einfach herstellbar und kann bei geeigneter Wahl des Materials und geeigneter Form und Positionierung eine große Klemmkraft zur Verfügung stellen.

Das erfindungsgemäße Leitungssystem kann als Dachentwässerungssystem, insbesondere zum Abführen von Regenwasser, eingesetzt werden. Es ist aber ebenso möglich, die Erfindung zum Ableiten anderer Flüssigkeiten, z. B. von Abwässern, von Produktionsflüssigkeiten, von Chemikalien, etc., einzusetzen.

Durch den Krallenabschnitt kann eine sehr zuverlässige Sicherung der Steckverbindung erreicht werden. Der Krallenabschnitt kann scharfkantig sein, um so das Verkrallen zu erleichtern und einen festen Sitz der Krallen in dem Rohrelement zu gewährleisten. Das Klemmelement ist so gestaltet, dass es beim Zusammenstecken der Rohrelemente nicht oder nur wenig hinderlich ist, allerdings ein unbeabsichtigtes Auseinanderziehen - wenn überhaupt - nur schwer möglich ist.

Ein weiterer Vorteil der Erfindung liegt darin, dass die Klemmsicherung in verschiedenen Winkelstellungen der Rohrelemente relativ zueinander funktioniert.

In einer weiteren, besonders vorteilhaften Ausgestaltung ist das Klemmelement als Federzungenelement ausgebildet. Dieses ist in einem den Krallenabschnitt als äußeres Ende aufweisenden Bereich mehrfach abgewinkelt. Diese mehrfachen Abwinkelungen können zwischen der Innenseite der Einstecköffnung und der Außenseite des Einsteckbereiches angeordnet sein, wodurch ebenfalls auf einfache Weise eine stabile gesicherte Verbindung zwischen den Rohrelementen realisierbar ist.

Weitere vorteilhafte Ausgestaltungen der Erfindung können den abhängigen Ansprüchen entnommen werden.

Im Folgenden werden die Erfindung und ihre Vorteile an Hand von Beispielen unter Bezugnahme auf die Zeichnungen beschrieben. Es zeigen:
- Fig. 1: ein Anwendungsbeispiel eines erfindungsgemäßen Leitungssystems als Regenfallrohrsystem an einem Haus,
- Fig. 2: einen Ablaufstutzen eines ersten Ausführungsbeispiels eines erfindungsgemäßen Leitungssystems zum Ableiten von Regenwasser mit einer Zunge als Klemmelement,
- Fig. 3: eine teilweise geschnittene Seitenansicht des Ablaufstutzens gemäß dem ersten Ausführungsbeispiel,
- Fig. 4: eine Frontansicht der Zunge gemäß dem ersten Ausführungsbeispiel,
- Fig. 5: eine teilweise geschnittene Seitenansicht eines Ablaufstutzens und eines auf diesen aufgeschobenen Ablaufrohrbogens eines zweiten Ausführungsbeispiels eines erfindungsgemäßen Leitungssystems zum Ableiten von Regenwasser mit einem Federzungenelement als Klemmelement, das eine Zickzackstruktur aufweist,
- Fig. 6: eine Seitenansicht des Federzungenelementes und
- Fig. 7: eine Schnittansicht des Umfangs eines Ablaufstutzens und eines Ablaufrohrbogens eines dritten Ausführungsbeispiels eines erfindungsgemäßen Leitungssystems mit zwei Federzungenelementen an gegenüberliegenden Stellen des Umfangs des Ablaufstutzens.

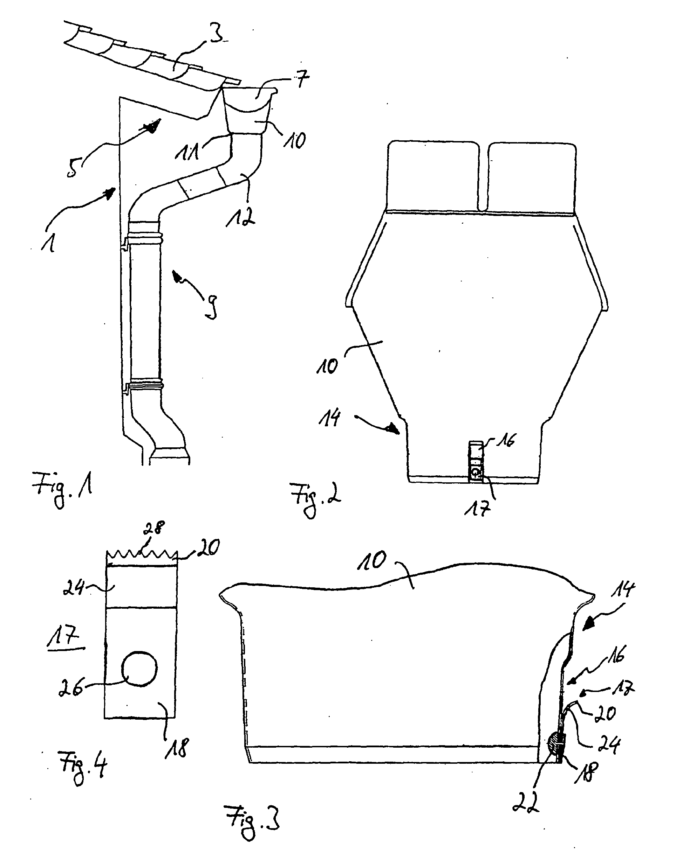

Die Fig. 1 zeigt ein Anwendungsbeispiel eines erfindungsgemäßen Leitungssystems als Regenfallrohrsystem 9 an einer Hauswand 1 eines Hauses. Das Haus weist ein Dach 3 auf, an dessen äußerem Ende eine nach oben offene Dachrinne 7 verläuft. Das Dach hat gegenüber der Hauswand 1 einen Überstand 5. Ein erstes Rohrelement des Regenfallrohrsystems 9 ist ein Ablaufstutzen 10, der an die Dachrinne 7 angehängt und an ihr befestigt ist. Der Ablaufstutzen 10 leitet das von der Dachrinne 7 gesammelte Regenwasser trichterförmig in das Regenfallrohrsystem 9 ein. Um den auf Grund des Überstandes 5 von der Hauswand 1 beabstandeten oberen Bereich des Regenfallrohrsystems 9 an den nah an der Hauswand 1 befestigten unteren Bereich des Regenfallrohrsystems 9 heranzuführen, schließt sich an das untere Ende des Ablaufstutzens 10 ein zweites Rohrelement in Form eines Ablaufrohrbogens 12 an. Ablaufstutzen 10 und Ablaufrohrbogen 12 sind ineinander gesteckt, so dass sie sich teilweise überlappen und zwischen ihnen eine Steckverbindung 11 vorhanden ist. Der Ablaufrohrbogen 12 ist bogenförmig ausgestaltet und so ausgerichtet, dass er das Regenwasser in das vertikale Fallrohr an der Hauswand 1 führt. Im Beispiel gemäß der Fig. 1 schließt sich an dem geraden vertikalen Fallrohr ein weiterer Ablaufrohrbogen an, der das Regenwasser in den unteren Bereich des Regenfallrohrsystems 9 überführt. Dieser untere Bereich verläuft entlang der Hauswand 1 senkrecht in Richtung des Bodens. Die Rohrelemente des Regenfallrohrsystems 9 sind hier aus Edelstahl. Sie können aber ebenfalls aus einer Kupferlegierung, einem anderen Metall oder einem Kunststoffmaterial sein.

Die bogenförmige Ausgestaltung des Ablaufrohrbogens 12 verursacht bei starkem Regenfall, und damit einer großen Menge abzuführenden Regenwassers, eine große Belastung, insbesondere auf Grund der großen Gewichtskräfte des Regenwassers, auf den Ablaufrohrbogen 12 und die Verbindungsstelle 11. Um einer Trennbewegung der beiden Rohrelemente 10, 12 entgegenzuwirken und eine Auftrennung der Steckverbindung 11 zu verhindern, wird die Verbindung 11 gesichert. Dabei wird ein zusätzliches Klemmelement aus einem harten Material verwendet, z. B. aus einem insbesondere gehärteten Stahl oder einem anderen Metall, mit dem sich große Klemmkräfte auf die beiden Rohrelemente 10, 12 erzeugen lassen. Das Klemmelement ist mechanisch wirksam und optisch unauffällig in den Überlappungsbereich zwischen den beiden Rohrelementen 10, 12 eingebracht.

Fig. 2 zeigt den Ablaufstutzen 10 eines ersten Ausführungsbeispiels des erfindungsgemäßen Leitungssystems 9 mit einer länglichen Zunge 17 als Klemmelement. Der Ablaufstutzen 10 hat an seinem unteren Ende einen rohrförmigen Einsteckbereich 14, der ggf. konisch verläuft und dessen äußerer Durchmesser gegenüber dem übrigen Ablaufstutzen 10 verkleinert ist. An einer vorteilhafterweise beliebigen Position an der äußeren Wand des Einsteckbereiches 14 weist der Ablaufstutzen 10 ausgehend von seinem unteren Ende eine sich in axialer Richtung des Rohransatzes 14 erstreckende längliche Nut 16 auf, die hier als Sicke ausgebildet ist. In dieser Nut 16 ist die Zunge 17 fixiert.

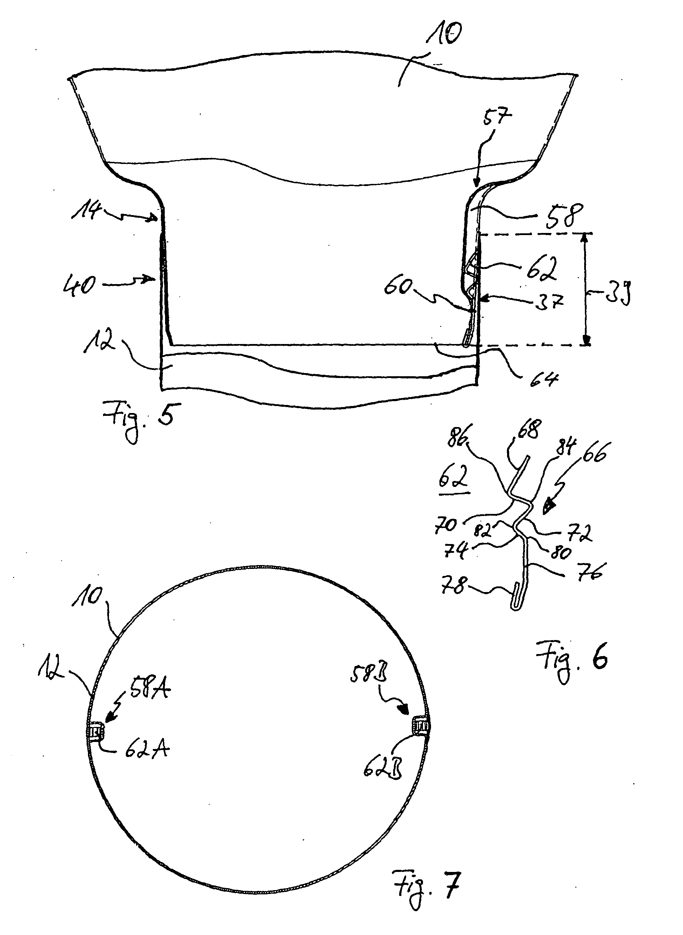

Fig. 3 zeigt eine teilweise geschnittene Seitenansicht des Ablaufstutzens 10 gemäß dem ersten Ausführungsbeispiel. Der Bereich der Nut 16 und der Zunge 17 ist hier vergrößert dargestellt. Die Zunge 17 ist in einem unteren Bereich 18 am unteren Ende des Ablaufstutzens 10 mittels eines Niets 22 fixiert und verläuft nach oben, zunächst angepasst an den Verlauf der Nut 16. Die Zunge 17 liegt mit ihrem unteren Bereich 18 in der Nut 16 und weist an ihrem freien Ende einen zweifach nach außen abgewinkelten Bereich 20, 24 auf. Der obere Endabschnitt 20 ist ein Krallenabschnitt mit radial nach außen aus der Nut 16 reichenden scharfkantigen Krallen, die dazu dienen, sich mit dem Ablaufrohrbogen 12 an dessen Innenseite zu verkrallen, um dadurch die Steckverbindung zwischen Ablaufstutzen 10 und Ablaufrohrbogen 12 mit großen Klemmkräften zu sichern. Auf Grund der abgewinkelten Form der Zunge 17 und ihrer Fixierung im unteren Bereich 18 kann die Zunge 17 wie eine Art Feder wirken. Dadurch ist ein leichtes Aufstecken des Ablaufrohrbogens 12 bei gleichzeitig starker Verkrallung in aufgestecktem Zustand gegeben. Das Klemmelement gewährleistet somit nach Art eines Widerhakens einen Klemmwiderstand, der beim Zusammen-stecken der Rohrelemente 10, 12 geringer ist als beim Auseinanderziehen. Das Auseinanderziehen der Rohrelemente 10, 12 ist somit bedarfsweise möglich, allerdings nur bei Aufwenden großer Ziehkräfte oder beispielsweise mittels eines Zurückdrückens des oberen Bereiches 20 der Zunge 17 in Richtung der Nut 16.

Fig. 4 zeigt eine Frontansicht der Zunge 17. Dargestellt ist in ihrem unteren Bereich 18 ein Loch 26, das zum Befestigen der Zunge 17 an dem Ablaufstutzen 10 dient, indem der Niet 22 durch dieses Loch 26 gesteckt wird. Im oberen Bereich 20 ist der Krallenabschnitt zu sehen, der hier eine Vielzahl von nebeneinander angeordneten Zähnen 28 aufweist, die aus der Nut heraus schräg nach oben abstehen. Diese Zähne 28 verkrallen sich im aufgesteckten Zustand des Ablaufrohrbogens 12 in dem Material des Ablaufrohrbogens 12, und zwar spätestens beim Versuch, die Rohrelemente 10, 12 auseinander zu ziehen.

Fig. 5 zeigt die teilweise geschnittene Seitenansicht des Ablaufstutzens 10 und des auf diesen aufgeschobenen Ablaufrohrbogens 12 gemäß einem zweiten Ausführungsbeispiel des erfindungsgemäßen Leitungssystems. Der Einsteckbereich 14 des Ablaufstutzens 10 und die Einstecköffnung 40 des Ablaufrohrbogens 12 überlappen sich in dem Überlappungsbereich 37. Dieser hat in axialer Richtung die Breite 39. Zum Erzeugen der gesicherten Steckverbindung ist ein Federzungenelement 62 als Klemmelement vorhanden.

Eine Seitenansicht dieses Federzungenelements 62 ist in der Fig. 6 näher dargestellt. Das Federzungenelement 62 weist einen Krallenabschnitt 66 als äußeres Ende auf, in dem das längliche Federzungenelement 62 mehrfach abgewinkelt ist. Im vorliegenden Ausführungsbeispiel ist der Krallenbereich 66 so abgewinkelt, dass das Federzungenelement 62 eine Zickzackstruktur mit aufeinander folgend in entgegengesetzte Richtungen sich erstreckenden Erhebungen 80, 82, 84, 86 hat. An seinem vom Krallenabschnitt 66 entfernten Ende weist das Federzungenelement 62 einen Hakenabschnitt 78 auf, der hier U-förmig gebogen ist und mit dem es am stirnseitigen Ende auf eines der Rohrelemente 10, 12 aufgesteckt werden kann. An den U-förmigen Hakenabschnitt 78 schließt sich beim Federzungenelement 62 leicht abgewinkelt ein erster länglicher Streckenabschnitt 76 an, an den ein in eine erste Richtung gebogener, zweiter länglicher Streckenabschnitt 74 angrenzt. Dadurch ist zwischen den beiden Streckenabschnitten 74, 76 die erste Erhebung 80 in eine zweite Richtung vorhanden. Die zweite Richtung ist dabei der ersten Richtung entgegengesetzt. Auf den zweiten Streckenab-schnitt 74 wiederum folgt ein in die zweite Richtung gebogener, länglicher dritter Streckenabschnitt 72. Dadurch ist zwischen den beiden Streckenabschnitten 72, 74 die zweite Erhebung 82 in die erste Richtung vorhanden. Auf den dritten Streckenabschnitt 72 folgt ein in die erste Richtung gebogener, länglicher vierter Streckenabschnitt 70. Dadurch ist zwischen den beiden Streckenabschnitten 70, 72 die dritte Erhebung 84 in die zweite Richtung vorhanden. An den vierten Streckenabschnitt 70 schließt sich ein in die zweite Richtung gebogener, länglicher fünfter Streckenabschnitt 68 an. Dadurch ist zwischen den beiden Streckenabschnitten 68, 70 die vierte Erhebung 86 in die erste Richtung vorhanden.

Im Ausführungsbeispiel gemäß der Fig. 5 weist der Einsteckbereich 14 des Ablaufstutzens 10 eine längliche Nut 57 auf, die das Federzungenelement 62 aufnimmt. Die Nut 57 erstreckt sich im Einsteckbereich 14 ausgehend von dem stirnseitigen Ende des Ablaufstutzens 10 in axialer Richtung. Die Nut 57 weist einen tief in den Einsteckbereich 14 eingeschnittenen ersten Nutbe-reich 58 und einen weniger tief in den Einsteckbereich 14 eingeschnittenen zweiten Nutbereich 60 auf. Der Krallenabschnitt 66 ist in den ersten Nutbereich 58 eingelegt. Der zweite Nutbereich 60 stellt eine Ablagefläche bereit, an die sich der erste Streckenabschnitt 76 flächig anlehnt. Und der zweite Streckenabschnitt 74 lehnt sich flächig an den Übergang des ersten Nutbereiches 58 zu dem zweiten Nutbereich 60 an. Der Hakenabschnitt 78 ist in das stirnseitige Ende des Ablaufstutzens 10 eingehängt. Die Erhebungen 82 und 86 stützen sich an der Wand des ersten Nutbereiches 58 des Ablaufstutzens 10 ab und die Erhebung 84 sowie das vorzugsweise scharfkantige Ende des fünften Streckenabschnitts 68 an der Wand der Einstecköffnung 40 des Ablaufrohrbogens 12. Durch diese Positionierung des Federzungenelementes 62 in der Nut 57 ist ein besonders guter Halt des Federzungenelementes 62 und eine besonders gute Klemmverbindung gegeben. In einer Variante der Ausführungsform ist der zweite Nutbereich 60 nicht vorhanden, so dass der Bereich 76 des Klemmelementes 62 außen am Umfang des Einsteckbereiches 14 anliegt.

Fig. 7 zeigt eine Schnittansicht des Umfangs des Ablaufstutzens 10 und des Ablaufrohrbogens 12 gemäß einem dritten Ausführungsbeispiel des erfindungsgemäßen Leitungssystems 9. In diesem Ausführungsbeispiel sind zwei Federzungenelemente 62A und 62B an gegenüberliegenden Stellen des Umfangs des Ablaufstutzens 10 als Klemmelemente zwischen die beiden Rohrelemente 10, 12 eingebracht. Dadurch kann die Klemmwirkung und die Sicherung der Steckverbindung zwischen den beiden Rohrelementen 10, 12 weiter erhöht werden.

In den zuvor beschriebenen Ausführungsbeispielen sind die Nuten zur Aufnahme der Klemmelemente in der Außenseite des Einsteckbereiches 14 des Ablaufstutzens 10 vorgesehen. Es ist aber ebenso möglich, diese Nuten in die Innenseite der Einstecköffnung 40 des Ablaufrohrbogens 12 einzubringen. Gleichfalls ist es möglich, das in dem zuvor an Hand der Fig. 1-4 beschriebenen ersten Ausführungsbeispiel an dem Ablaufstutzen 10 befestigte Klemmelement 17 an der Innenseite der Einstecköffnung 40 des Ablaufrohrbogens 12 anzubringen.

## Patentansprüche

1. Leitungssystem (9) zum Ableiten von Flüssigkeit, insbesondere Dachentwässerungsrohrsystem, mit wenigstens zwei Rohrelementen (10, 12), die durch Herstellung einer gemeinsamen Steckverbindung aneinander anschließbar sind, wobei eines der Rohrelemente (10) einen als Einsteckbereich (14) vorgesehenen Endabschnitt und das andere Rohrelement (12) einen eine Einstecköffnung (40) zur Aufnahme des Einsteckbereichs (14) aufweisenden Endabschnitt hat, wobei zur Sicherung der Steckverbindung im betriebsfertig montierten Zustand der Rohrelemente (10, 12) wenigstens ein in deren Überlappungsbereich (37) zwischen den Endabschnitten positioniertes Klemmelement (17, 62), insbesondere aus Metall, vorgesehen ist, welches wenigstens eine Zunge (17) mit einem Krallenabschnitt (20) an einem ihrer Enden aufweist, **dadurch gekennzeichnet, dass** die Zunge zumindest teilweise in einer insbesondere als Sicke ausgebildeten, axial verlaufenden Nut (16, 30, 42, 57) in dem Endabschnitt (14, 40) eines der Rohrelemente (10, 12) aufgenommen und an einem der Rohrelemente (10) formschlüssig fixiert ist.

2. Leitungssystem nach Anspruch 1, **dadurch gekennzeichnet, dass** das Klemmelement (17, 62) wenigstens einen insbesondere scharfkantigen Krallenabschnitt (20, 66) aufweist, mit dem es sich in Richtung aus der Nut (16, 57) des einen Rohrelements heraus nach außen erstreckt, derart, dass der Krallenabschnitt (20, 66) mit dem betreffenden anderen Rohrelement (10, 12) an dessen Endabschnitt (14, 40) verkrallend in Eingriff kommen kann, um einer Trennbewegung der Rohrelemente (10, 12) relativ zueinander entgegenzuwirken.

3. Leitungssystem nach Anspruch 1 oder 2, **dadurch gekennzeichnet, dass** das Klemmelement (17, 62) so gestaltet und zwischen den Endabschnitten (14, 40) positioniert ist, dass es beim Zusammenstecken der Rohrelemente (10, 12) einen geringeren Klemmwiderstand erzeugt als beim Auseinanderziehen der Rohrelemente (10, 12).

4. Leitungssystem nach Anspruch 1, 2 oder 3, **dadurch gekennzeichnet, dass** das Klemmelement (17) an einem der Rohrelemente (10) angenietet ist.

5. Leitungssystem nach Anspruch 4, **dadurch gekennzeichnet, dass** der Krallenabschnitt (20,66) vor dem Zusammenstecken der Rohrelemente (10, 12) orthogonal zur Rohrelementachse oder schräg dazu in axialer Richtung weg von dem stirnseitigen Ende des die Nut (16, 57) mit dem darin aufgenommenen Klemmelement (17, 62) aufweisenden Endabschnittes (14) des einen Rohrelementes (10) orientiert ist, so dass er beim Zusammenstecken der Rohrelemente (10, 12) von dem betreffenden anderen Rohrelement (12) unter Aufrechterhaltung der gegenseitigen Beaufschlagung zwischen dem Krallenabschnitt (20, 66) und dem anderen Rohrelement (12) zumindest teilweise in die Nut (16, 57) und dabei axial in Richtung weg von dem stirnseitigen Ende des die Nut (16, 57) aufweisenden Endabschnittes (14) des einen Rohrelementes (10) verdrängt werden kann.

6. Leitungssystem nach einem der vorhergehenden Ansprüche, **dadurch gekennzeichnet, dass** der Krallenabschnitt (20, 60) verzahnt ist.

7. Leitungssystem nach einem der vorhergehenden Ansprüche, **dadurch gekennzeichnet, dass** die Zunge (17) insbesondere mehrfach abgewinkelt ist.

8. Leitungssystem nach einem der vorhergehenden Ansprüche, **dadurch gekennzeichnet, dass** die Rohrelemente (10, 12) aus Metall, insbesondere Edelstahl oder einer Kupferlegierung, gebildet sind.

9. Leitungssystem nach einem der vorhergehenden Ansprüche, **dadurch gekennzeichnet, dass** das Klemmelement (17, 62) aus einem Stahl, insbesondere aus gehärtetem Stahl, gebildet ist.

10. Leitungssystem nach einem der vorhergehenden Ansprüche, **dadurch gekennzeichnet, dass** es ein Leitungssystem (9) zum Ableiten von Regenwasser ist und das erste Rohrelement (10) ein Ablaufstutzen zum Anbringen an ein Dachrinnenelement (7) und das zweite Rohrelement (12) ein Ablaufrohrbogen ist.

11. Leitungssystem nach Anspruch 10, **dadurch gekennzeichnet, dass** das Klemmelement (17) an dem Ablaufstutzen (10) fixiert ist.

## Claims

1. Piping system (9) for draining liquid, in particular roof drain pipe system, with at least two pipe elements (10, 12) which can be joined together by establishing a common plug-in connection, wherein one of the pipe elements (10) has an end portion provided as an insertion region (14) and the other pipe element (12) has an end portion comprising an insertion opening (40) for receiving the insertion region (14), wherein at least one clamping element (17, 62), in particular of metal, is provided in order to secure the plug-in connection when the pipe elements (10, 12) are assembled ready-for-operation, this clamping element being positioned in the overlap region (37) of the pipe elements between the end portions and comprising at least one tongue (17) with a claw portion (20) at one of its ends, **characterised in that** the tongue is held at least partly in an axially extending groove (16, 30, 42, 57), which is formed in particular as a bead, in the end portion (14, 40) of one of the pipe elements (10, 12) and positively fixed to one of the pipe elements (10).

2. Piping system according to Claim 1, **characterised in that** the clamping element (17, 62) comprises at least one, in particular sharp-edged, claw portion (20, 66) by way of which it extends outwards in the direction out of the groove (16, 57) of one pipe element such that the claw portion (20, 66) can engage with a digging action with the other pipe element (10, 12) in question at the end portion (14, 40) thereof in order to oppose a separating movement of the pipe elements (10, 12) relative to one another.

3. Piping system according to Claim 1 or 2, **characterised in that** the clamping element (17, 62) is configured and positioned between the end portions (14, 40) such that it produces a lower clamping resistance when the pipe elements (10, 12) are assembled than when the pipe elements (10, 12) are drawn apart.

4. Piping system according to Claim 1, 2 or 3, **characterised in that** the clamping element (17) is riveted to one of the pipe elements (10).

5. Piping system according to Claim 4, **characterised in that**, prior to the assembly of the pipe elements (10, 12), the claw portion (20, 66) is oriented orthogonally to the pipe element axis or obliquely thereto in the axial direction away from the front-side end of the end portion (14), comprising the groove (16, 57) with the clamping element (17, 62) held therein, of one pipe element (10), so that when the pipe elements (10, 12) are assembled it can be displaced by the other pipe element (12) in question at least partly into the groove (16, 57) and in the process axially in the direction away from the front-side end of the end portion (14), comprising the groove (16, 57), of one pipe element (10), while maintaining the interaction between the claw portion (20, 66) and the other pipe element (12).

6. Piping system according to any one of the preceding Claims, **characterised in that** the claw portion (20, 60) is toothed.

7. Piping system according to any one of the preceding Claims, **characterised in that** the tongue (17) is in particular repeatedly bent.

8. Piping system according to any one of the preceding Claims, **characterised in that** the pipe elements (10, 12) are formed from metal, in particular special steel or a copper alloy.

9. Piping system according to any one of the preceding Claims, **characterised in that** the clamping element (17, 62) is formed from a steel, in particular from hardened steel.

10. Piping system according to any one of the preceding Claims, **characterised in that** it is a piping system (9) for draining rainwater, and the first pipe element (10) is an outflow connection piece for fitting to a gutter element (7) and the second pipe element (12) is an outflow pipe bend.

11. Piping system according to Claim 10, **characterised in that** the clamping element (17) is fixed to the outflow connection piece (10).

## Revendications

1. Système de conduite (9) pour l'évacuation d'un liquide, en particulier un système de descente de gouttière, comportant au moins deux éléments de tube (10, 12), qui peuvent être assemblés l'un à l'autre par la réalisation d'un assemblage enfiché commun, l'un des éléments de tube (10) étant muni d'une partie d'extrémité prévue sous la forme d'une zone à enficher (14) et l'autre élément de tube (12) étant muni d'une partie d'extrémité comportant une ouverture d'enfichage (40) destinée à recevoir la zone à enficher (14), dans lequel pour bloquer l'assemblage enfiché des éléments de tube (10, 12) dans la position montée prête à l'emploi, il est prévu au moins un élément de serrage (17, 62), en particulier en métal, qui est positionné dans la zone de chevauchement (37) desdits éléments de tube entre les parties d'extrémité de ceux-ci, et qui comporte au moins une patte (17) avec une zone de griffes (20) sur une de ses extrémités, **caractérisé en ce que** la patte est logée au moins en partie dans une rainure (16, 30, 42, 57) orientée dans le sens axial et réalisée en particulier sous forme de cannelure dans la partie d'extrémité (14, 40) de l'un des éléments de tube (10, 12), et est fixée par conjugaison de forme sur l'un des éléments de tube (10).

2. Système de conduite selon la revendication 1, **caractérisé en ce que** l'élément de serrage (17, 62) comporte au moins une zone de griffes (20, 66), en particulier à arêtes vives, avec laquelle il s'étend vers l'extérieur dans la direction sortant de la rainure (16, 57) de l'un des éléments de tube, de telle sorte que la zone de griffes (20, 66) peut entrer en prise par accrochage avec l'autre élément de tube (10, 12) concerné au niveau de la partie d'extrémité (14, 40) de celui-ci, afin d'empêcher tout mouvement de séparation des éléments de tube (10, 12) l'un par rapport l'autre.

3. Système de conduite selon la revendication 1 ou 2, **caractérisé en ce que** l'élément de serrage (17, 62) est conçu et est positionné entre les parties d'extrémité (14, 40) de telle sorte qu'au moment de l'emboîtement des éléments de tube (10, 12), il se développe une résistance de serrage, qui est inférieure à celle générée au moment de la séparation des éléments de tube (10, 12).

4. Système de conduite selon la revendication 1, 2 ou 3, **caractérisé en ce que** l'élément de serrage (17, 62) est riveté sur l'un des éléments de tube (10).

5. Système de conduite selon la revendication 4, **caractérisé en ce que**, avant l'emboîtement des éléments de tube (10, 12), la zone de griffes (20, 66) est orientée orthogonalement à l'axe de l'élément de tube ou en oblique par rapport à celui-ci en s'écartant dans le sens axial de l'extrémité frontale de la partie d'extrémité (14) de l'un des éléments de tube (10), munie de la rainure (16, 57) avec l'élément de serrage (17, 62) logé dans celle-ci, de telle sorte que, au moment de l'emboîtement des éléments de tube (10, 12), elle peut être poussée par l'autre élément de tube (12) concerné au moins partiellement dans la rainure (16, 57), tout en maintenant la sollicitation réciproque entre la zone de griffes (20, 66) et l'autre élément de tube (12), et, dans ce cas, en s'écartant dans le sens axial de l'extrémité frontale de la partie d'extrémité (14) de l'un des éléments de tube (10), munie de la rainure (16, 57).

6. Système de conduite selon l'une des revendications précédentes, **caractérisé en ce que** la zone de griffes (20, 60) est dentée.

7. Système de conduite selon l'une des revendications précédentes, **caractérisé en ce que** la patte (17) est pliée, en particulier plusieurs fois.

8. Système de conduite selon l'une des revendications précédentes, **caractérisé en ce que** les éléments de tube (10, 12) sont réalisés en métal, en particulier en acier inoxydable ou dans un alliage de cuivre.

9. Système de conduite selon l'une des revendications précédentes, **caractérisé en ce que** l'élément de serrage (17, 62) est réalisé en acier, en particulier en acier trempé.

10. Système de conduite selon l'une des revendications précédentes, **caractérisé en ce que** le système de conduite (9) est un système de conduite pour l'évacuation des eaux de pluie et le premier élément de tube (10) est une tubulure d'évacuation à monter sur un élément de gouttière (7) et le deuxième élément de tube (12) est un coude de tube d'évacuation.

11. Système de conduite selon la revendication 10, **caractérisé en ce que** l'élément de serrage (17) est fixé sur la tubulure d'évacuation (10).
